## Europäisches Patentamt

(19) **European Patent Office**

**Office européen des brevets**

(11) Publication number: **0 203 893**

**B1**

(12) # EUROPEAN PATENT SPECIFICATION

(45) Date of publication of the patent specification:
**25.01.89**

(51) Int. Cl.⁴: **B 23 Q 3/00**

(21) Application number: **86830092.2**

(22) Date of filling: **17.04.86**

(54) Modular workpiece-feed mechanism for use with woodworking machinery.

(30) Priority: **15.05.85 IT 490085 U**

(43) Date of publication of application:
**03.12.86 Bulletin 86/49**

(45) Publication of the grant of the patent:
**25.01.89 Bulletin 89/4**

(84) Designated Contracting States:
**BE CH DE FR LI NL SE**

(56) References cited:
**EP-A-0 058 369
DE-A-2 109 716
DE-B-1 044 386
DE-B-1 227 635
FR-A-1 506 307
US-A-1 540 703**

(73) Proprietor: **SAMCO INDUSTRIA S.p.A., Strada Statale Marecchiese, 67, I-47040 Villa Verucchio (Forli) (IT)**

(72) Inventor: **Grassi, Giorgio, Via Marinelli, 3, I-47023 Cesena Forli (IT)**

(74) Representative: **Lanzoni, Luciano, c/o BUGNION S.p.A. Via Farini, 37, I-40124 Bologna (IT)**

EP 0 203 893 B1

## Description

The invention described herein relates to a modular workpiece-feed mechanism for use with woodworking machines.

Numerous woodworking machines, such as circular saws and band saws, sanders etc., are designed to operate in conjunction with feed mechanisms which convey workpieces through a rectilinear path into the cutting, planing or other work stroke.

A feed mechanism of the type consists of a bearing structure, one upright bulkhead of which carries a set of mutually aligned feed rollers mounted to respective swivel arms and driven by shafts disposed parallel with one another. A sprocket is keyed to each shaft at a point between the upright bulk-head and a transmission housing attached thereto, and a single chain engages the cogs of each sprocket so as to synchronize the rollers. A gear wheel, keyed to one of the parallel shafts at a point inside the housing, meshes with a gear wheel keyed to a further shaft disposed parallel to the roller shafts and integral with a worm wheel, this in turn meshing with a worm that is driven by a motor integral with the bearing structure. The bearing structure further comprises a guard covering the feed rollers, and a set of stops limiting downward travel of the swivel arms. Such is a typical prior art embodiment.

Another solution, as shown in EP-A-0 058 369, instead of chains utilizes a rigid shaft and gear transmission able to drive said disposed parallel roller shafts.

Mechanisms of the above types duly permit of feeding workpieces into the woodworking machine, though are beset by a number of drawbacks; in particular, the number of rollers that can be fitted is fixed, once the type of mechanism has been decided upon. Those persons skilled in the art will know that there are mechanisms with two, three four and more rollers, though once having opted, say, for a three-roller feed, there is no possibility of subsequent modification whereby, for instance, four-roller feed can be obtained, since the bearing structure and transmission housing are cast.

Another disadvantage of prior art feed mechanisms is that of limited speed variation; in practice, speed can only be altered at the prime mover, generally a two-speed electric motor, and by switching the two gears in constant mesh. This particular drawback can be overcome by incorporation of a variator between motor and worm gear unit, though such modifications must be specified at the moment of ordering, likewise because the cast bearing structure cannot subsequently be altered.

It would be obvious to think in terms of embodying a bearing structure that will accept a greater number of feed rollers and incorporate a variator, even for more compact versions of the mechanism, with a view to possible enlargement at some future time; this type of approach is disqualified on the grounds of cost, however, and in any event the feed mechanism would not operate as intended.

The object of the invention described herein is that of eliminating the drawbacks of prior art workpiece feed mechanisms as described above; accordingly, the invention as claimed herein provides an answer to the problem of how a feed mechanism may be embodied according to the prior art, though with provision made for extensive conversion and/or enlargement as dictated by diverse engineering requirements.

A feed mechanism as described herein affords the advantage, not merely of being more functional, but also of costing much less to construct than current prior art embodiments. Marked economies are achieved by virtue of the fact that certain components, for instance, the basic bearing structure, remain identical whatever the type of feed, with additional modules being added only as and when necessary.

A further advantage of the feed mechanism described herein is that a purchaser possesses the facility of modifying its embodiment, in situ, to suit specific operating requirements.

An embodiment of the invention will now be described in detail, by way of example, with the aid of the accompanying drawings, in which:

- fig. 1    shows the side elevation of a modular workpiece feed mechanism as described herein, seen from the transmission housing side, with certain parts omitted better to reveal others;
- fig. 2    is the section through II - II in fig. 1;
- fig. 3    is the section through I - I in fig. 2;
- fig. 4    is the sectional view of detail IV in fig. 1.

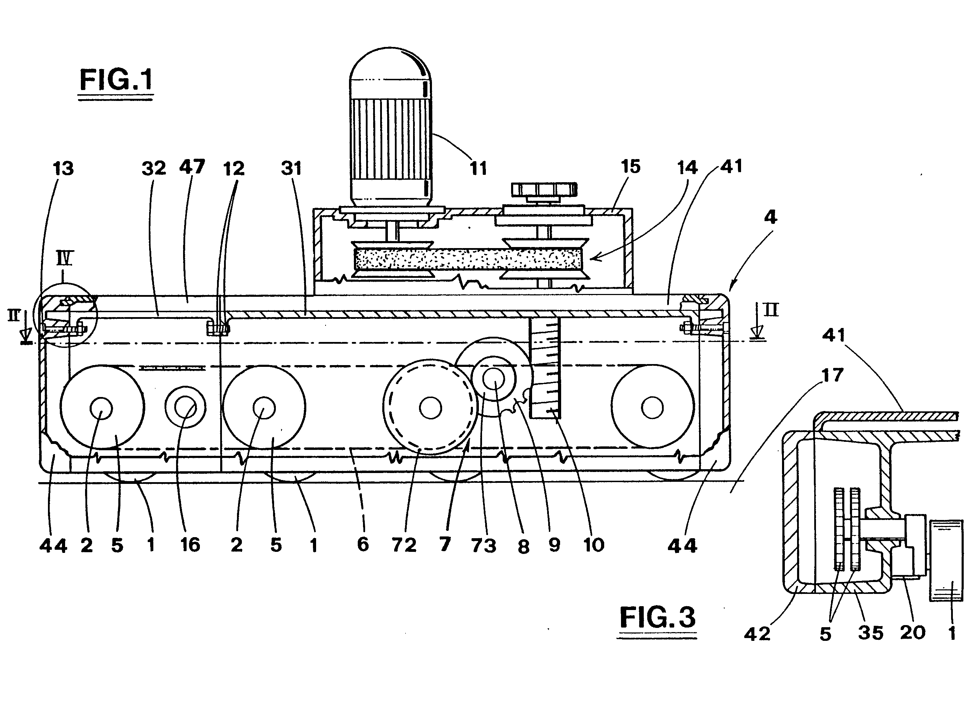

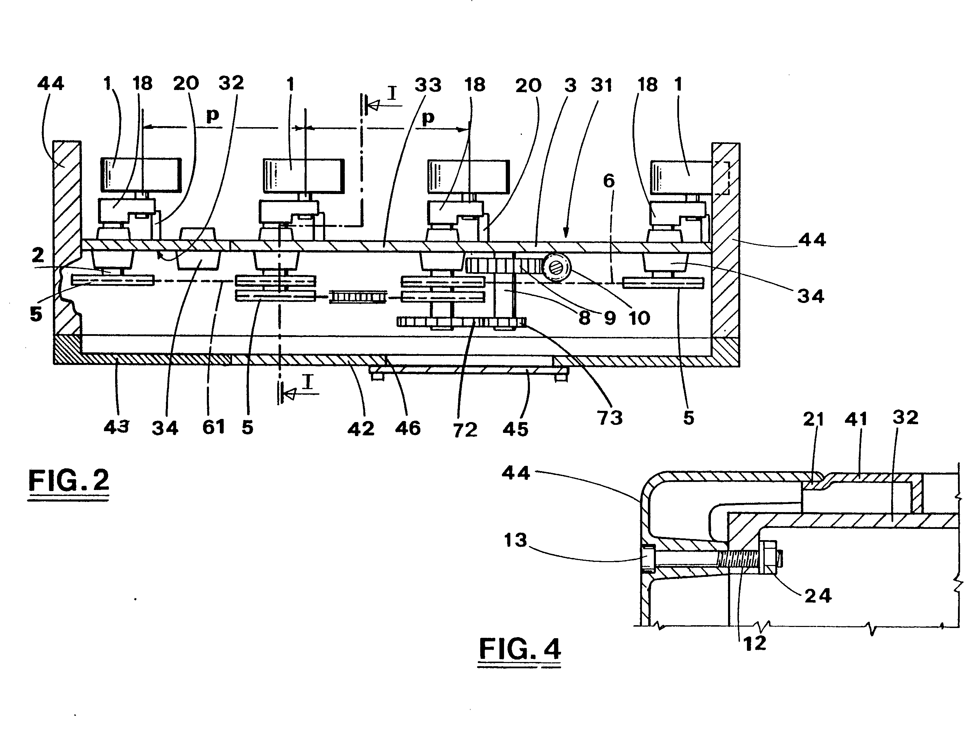

The workpiece feed mechanism as embodied in figs. 1 and 2 is designed for use with woodworking machinery and consists of a set of workpiece feed rollers 1, a bearing structure 3, a protective housing 4 enclosing the feed roller transmission, and a motor 11.

Each feed roller 1 is carried by a respective swivel-arm 18 mounted to an upright bulkhead 33 of the bearing structure 3, and driven by a respective shaft 2 which passes through the bulkhead 33 at a point suitably strengthened by a boss 34; the method by which drive is transmitted to the rollers will be explained in due course. Each swivel-arm 18 is tensioned by a spring (not illustrated) that biases it downwards into contact with a stop 20, and is embodied in such a way as to transmit drive from a relative shaft 2 to a relative feed roller 1. The depth of the upright bulkhead 33 is such that the feed rollers 1 project downward beyond its bottom edge in order to make contact with the workpiece beneath; the workpiece is denoted 17 in fig. 1. The shafts 2 are disposed parallel with one another, and will be regularly spaced apart (see distance p) in a conventional embodiment.

5 denotes a drive component keyed to each shaft 2 at a point separated from the feed roller 1 by the upright bulkhead 33; in the drawings, such components are embodied as sprockets, around which a single chain 6 is looped.

One of the shafts 2, generally the central one of the set, also carries a first gear wheel 72; this meshes with a second gear wheel 73 having a dissimilar number of teeth to the first 72, and the two thus constitute a mechanical drive transmission 7.

The second gear wheel 73 of the transmission 7 is keyed to a drive shaft 8 which is disposed parallel with the roller shafts 2 and carries a worm wheel 9, this in turn meshing with a worm 10 in receipt of drive from the motor 11.

The bearing structure 3 of a workpiece feed mechanism according to the invention consists of a basic unit 31, and where appropriate, of at least one additional module 32, both of which exhibit a cross-section substantially of T shape, the vertical member of which represents the upright bulkhead 33 and in the embodiment illustrated, is bent through 90° so as to create a bottom horizontal panel 35 for the protection of the transmission components driving the feed rollers 1.

12 denotes holes at either end of the basic unit 31 and of the additional modules 32, disposed parallel to the longitudinal axis of the basic unit 31. Such holes 12 are designed to accept relative fasteners, say, bolts 13; the holes 12 provided in the basic unit 31 are threaded, whereas those in the additional modules 32 are plain through holes (the reason will become clear in due course).

As figs. 1 and 2 demonstrate, the basic unit 31 exhibits three strengthening bosses 34 affording support to the three shafts 2 driving the rollers 1 such bosses 34 are set apart at equal distance p in order to ensure a smooth feed.

By contrast, each additional module 32 exhibits two holes 16 with strengthening bosses 34 set apart at a distance less than p, but calculated such as to permit fitment of the module at either end of the basic unit 31 whilst maintaining a regular distance p between the boss 34 of the additional module farthest from the basic unit, and the boss of the basic unit nearest to the addition module (see fig. 2).

The transmission housing 4 comprises a top panel 41 enclosing the basic unit 31 uppermost, a side panel 42 enclosing the basic unit at one side, a pair of transverse bulkheads 44 enclosing either end of the basic unit 31 or of the additional module 32, an additional side panel 43 enclosing the side of each additional module 32 added, and an additional top panel 47 enclosing each additional module uppermost. The top and the side panels 41, 47, 42 and 43 of the housing are provided with holes (not illustrated) by way of which they may be connected to the basic unit 31 and additional module 32, respectively, whereas each transverse bulkhead 44 is provided with through holes 12 located in exactly the safe positions as those of the basic unit and additional modules. Fitment of the transverse bulkheads to the basic unit or module involves location of the bolts 13 in the threaded holes 12 of the basic unit 31, or in the through holes 12 of the additional modules, in this latter instance, engaging relative nuts 24.

The various panels of the transmission housing 4 are provided with a peripheral lip 21 (see fig. 4) which is designed to locate in a corresponding peripheral channel (not illustrated) offered by the adjacent component.

The side panel 42 of the basic unit is provided with an opening 46, and a relative cover 45, affording access to the change gear wheels 72 and 73 keyed to the meshing roller shaft 2 and the drive shaft 8, for the purposes of altering feed speed.

The top of the basic unit 31 may be provided with a set of holes (not illustrated) in which to locate the clamp bolts of a housing 15 accommodating an infinitely variable speed control, or variator 14; modular fitment of such a variator is made possible, according to the invention, inasmuch as the assembly is simply inserted between motor 11 and worm 10.

It will be observed from figs 2 and 3 that pairs of sprockets 5 are keyed to two of the shafts 2 carried by the basic unit 31. A chain denoted 61 is looped around one of the sprockets on the endmost shaft 2 of the basic unit, and around the sprocket 5 of the shaft 2 carried by the additional module 32, thereby permitting transmission of drive to the additional feed roller 1.

The option likewise exists of replacing the chain 6 with a longer loop that will engage all such sprockets 5 as the basic unit 31 and the additional module or modules 32 happen to comprise.

**Claims**

1. A modular workpiece-feed mechanism for use with woodworking machinery, comprising:
- a set of mutually aligned feed rollers (1), each mounted by way of a respective swivel-arm (18) to the upright bulkhead (33) of a bearing structure (3), which are in receipt of drive via such swivel-arms from respective horizontal shafts (2) disposed parallel one with another and passing through the upright bulkhead;
- respective drive components (5) keyed to the shafts (2) at the side of the upright bulkhead opposite to the side occupied by the feed rollers; and:
- a gearwheel (72) keyed to one of the parallel shafts and rotated by a drive system (11 - 10). characterized it that:
- the bearing structure (3) consists of a basic unit (31) to which at least two swivel-arms (18) are mounted, together with the drive system (11 - 10), and, of one or more identical additional modules (32) each of which carrying at least one swivel-arm (18) and one parallel shaft (2) with a relative feed roller (1) and drive component (5);

- the basic unit (31) and additional modules (32) exhibit identical cross-section, substantially of T shape, and are provided with holes (12) at each end with axes disposed parallel to the longitudinal axis of the basic unit, in which fasteners (13) may be located in order to enable assembly of te bearing structure (3) in modular fashion; and

- a transmission unit (6, 61) is arranged in order to drive the shafts (2) parallel to the primary shaft belonging to the basic unit of the bearing structure.

2. Feed mechanism as in claim 1, the bearing structure (3) of which is enclosed uppermost and at one side, together with the drive components (5), by a transmission housing (4), wherein such a housing (4) consists of a top panel (41) enclosing the basic unit (31) uppermost, a side panel (42) enclosing the basic unit at one side, a pair of transverse bulkheads (44) enclosing either end of the basic unit (31) or of the additional modules (32), an additional top panel (47) enclosing each additional module uppermost, and an additional side panel (43) enclosing the side of each additional module; and wherein the side panel (42) of the basic unit is provided with an opening (46), enclosed by a relative cover (45), which affords access to the drive transmission (7).

3. Feed mechanism as in claim 1, wherein two drive components (5) are keyed side by side to at least one of the parallel shafts (2) carried by the basic unit (31), and a second transmission loop (61) engaging the outermost of two such components similarly engages the drive component keyed to the shaft (2) of an additional module.

4. Feed mechanism as in claim 1, wherein additional modules (32) of the bearing structure (3) can be fitted to either end of the basic unit (31) regardless.

5. Feed mechanism as in claim 1, wherein the basic unit (31) of the bearing structure (3) is designed to carry three parallel shafts (2), and wherein two drive components (5) are keyed to at least one of the two endmost shafts.

6. Feed mechanism as in claim 1, wherein the gearwheel (72) keyed to one of the parallel shafts meshes with a second gearwheel (73) keyed to a drive shaft (8) which is inegral with a worm wheel (9) meshing with a worm (10) driven by a motor (11), and wherein the worm is in receipt of drive from the motor by way of a speed variator (14) mounted in a relative housing (15) that can be fitted to and separated from the basic unit (31) of the bearing structure (3).

7. Feed mechanism as in claim 1, wherein the parallel shafts (2) carried by the basic unit (31) of the bearing structure (3) are spaced apart at a regular distance (p), and wherein each additional module (32) exhibits two holes (16) for the accomodation of such shafts, set apart at a distance such that a shaft located in the hole farthest from the basic unit will be separated from the shaft of the basic unit nearest the additional module by the same distance (p) that separates two adjacent shafts of the basic unit.

8. Feed mechanism as in claim 1, wherein the upright bulkhead (33) of the basic unit (31) and of the additional modules (32) constitutes the vertical member of the T shaped cross-section of the bearing structure (3), and is bent through 90° at bottom in order to create a horizontal bottom panel (35) affording protection to the assembly of components transmitting drive co the feed rollers (1).

**Patentansprüche**

1. Aus Bauteilen zusammengesetzte Vorschubeinrichtung für Holzbearbeitungsmaschinen, enthaltend:

- Einen Satz von zueinander ausgerichtet angeordneten Vorschubrollen (1), jede mit Hilfe eines entsprechenden Schwingarms (18) an der aufrechten Trennwand (33) einer Trägerstruktur (3) montiert, die ihren Antrieb über diese Schwingarme von entsprechenden horizontalen Wellen (2) erhalten, welche parallel zueinander angeordnet sind und durch die aufrechte Trennwand laufen;

- entsprechende Antriebselemente (5), die auf der Seite der aufrechten Trennwand an die Wellen (2) angeschlossen sind, die entgegengesetzt zu der Seite mit den Vorschubrollen liegt;

- ein an eine der parallelen Wellen angeschlossenes Zahnrad (72), das durch ein Antriebssystem (11, 10) in Umdrehung versetzt wird,

dadurch gekennzeichnet,

- dass die Trägerstruktur (3) aus einer Basiseinheit (31) besteht, an der, zusammen mit dem Antriebssystem (11, 10), wenigstens zwei Schwingarme (18) montiert sind, sowie aus einem oder mehreren gleichen zusätzlichen Bauteilen (32), jedes wenigstens einen Schwingarm (18) tragend sowie eine parallele Welle (2) mit einer entsprechenden Vorschubrolle (1) und einem Antriebselement (5);

- dass die Basiseinheit (31) und die zusätzlichen Bauteile (32) den gleichen, im wesentlichen T-förmigen Querschnitt aufweisen und an jedem Ende mit Bohrungen (12) versehen sind, deren Achsen parallel zu der Längsachse der Basiseinheit verlaufen, und in die Befestigungsmittel (13) eingesetzt werden können, so dass ein Zusammenbau der Trägerstruktur (3) zu einem Bausatz möglich ist, und

- dass ein Übertragungselement (6, 61) für den Antrieb der Wellen (2) parallel zu der Hauptwelle vorgesehen ist, die zu der Basiseinheit der Trägerstruktur gehört.

2. Vorschubeinrichtung nach Patentanspruch 1, bei der die Trägerstruktur (3) derselben zusammen mit den Antriebselementen (5) oben und auf der einen Seite in ein Getriebegehäuse

(4) eingeschlossen ist, <u>dadurch gekennzeichnet</u>, dass dieses Gehäuse (4) aus einer oberen Platte (41) besteht, welche die Basiseinheit (31) oben verschliesst, aus einer seitlichen Platte (42), welche die Basiseinheit auf der einen Seite verschliesst, einem Paar von querverlaufenden Trennwänden (44), die ein jedes Ende der Basiseinheit (31) oder das der zusätzlichen Bauteile (32) verschliessen, aus einer zusätzlichen oberen Platte (47), die jedes zusätzliche Bauteil oben verschliesst, und aus einer zusätzlichen seitlichen Platte (43), welche die Seite eines jeden zusätzlichen Bauteiles verschliesst, <u>und dadurch</u>, dass die seitliche Platte (42) der Basiseinheit mit einer Öffnung (46) versehen ist, verschlossen durch einen entsprechenden Deckel (45), die den Zugang zu dem Getriebe (7) gewährt.

3. Vorschubeinrichtung nach Patentanspruch 1, <u>dadurch gekennzeichnet</u>, dass zwei Antriebselemente (5) nebeneinanderliegend auf wenigstens eine der parallelen Wellen (2) aufgezogen sind, die von der Basiseinheit (31) getragen werden, wobei ein zweites Übertragungselement (61) um das äussere der beiden Elemente läuft und auf ähnliche Weise um das Antriebselement, das auf die Welle (2) eines zusätzlichen Bauteiles aufgezogen ist.

4. Vorschubeinrichtung nach Patentanspruch 1, <u>dadurch gekennzeichnet</u>, dass zusätzliche Bauteile (32) der Trägerstruktur (3) beliebig an beiden Enden der Basiseinheit (31) befestigt werden können.

5. Vorschubeinrichtung nach Patentanspruch 1, <u>dadurch gekennzeichnet</u>, dass die Basiseinheit (31) der Trägerstruktur (3) dazu bestimmt ist, drei parallele Wellen (2) zu tragen, <u>und dadurch</u>, dass zwei Antriebselemente (5) auf wenigstens eine der beiden an den Enden liegenden Wellen aufgezogen sind.

6. Vorschubeinrichtung nach Patentanspruch 1, <u>dadurch gekennzeichnet</u>, dass das auf eine der parallelen Wellen aufgezogene Zahnrad (72) in ein zweites Zahnrad (73) greift, das auf eine Antriebswelle (8) aufgezogen ist, welche mit einem Schneckenrad (9) verbunden ist, das in eine von einem Motor (11) angetriebene Endlosschnecke (10) greift, <u>und dadurch</u>, dass die Endlosschnecke ihren Antrieb von dem Motor über ein stufenloses Getriebe (14) erhält, das in einem entsprechenden Gehäuse (15) montiert ist, welches an der Basiseinheit der Trägerstruktur (3) befestigt und von dieser gelöst werden kann.

7. Vorschubeinrichtung nach Patentanspruch 1, <u>dadurch gekennzeichnet</u>, dass die von der Basiseinheit (31) der Trägerstruktur (3) getragenen parallelen Wellen (2) in einem gleichmässigen Abstand (p) voneinander angeordnet sind, <u>und dadurch</u>, dass jedes zusätzliche Bauteil (32) zwei Bohrungen (16) zum Einsetzen dieser Wellen enthält, die einen solchen Abstand voneinander haben, dass eine in der am weitesten von der Basiseinheit entfernt liegenden Bohrung angeordnete Welle von der Welle der Basiseinheit, die dem zusätzlichen Bauteil am nächsten liegt, um den gleichen Abstand (p) getrennt ist, der zwei nebeneinander liegende Wellen der Basiseinheit voneinander trennt.

8. Vorschubeinrichtung nach Patentanspruch 1, <u>dadurch gekennzeichnet</u>, dass die aufrechten Trennwände (33) der Basiseinheit (31) und der zusätzlichen Bauteile (32) das vertikale Element des T-förmigen Querschnittes der Trägerstruktur (3) bilden, das unten um 90° gebogen ist, so dass eine horizontale Bodenplatte (35) gebildet wird, die einen Schutz für die den Antrieb auf die Vorschubrollen (1) übertragenden Elemente bietet.

**Revendications**

1. Dispositif d'entraînement modulaire pour machines à bois, comprenant:
- une série de rouleaux d'entraînement (1) disposés en alignement réciproque, chacun monté au moyen d'un respectif bras tournant (18) sur la cloison verticale (33) d'une structure porteuse (3), et destinés à être actionnés à travers ledit bras tournant (18) par de respectifs arbres horizontaux (2) disposés parallèles l'un par rapport à l'autre et traversant ladite cloison verticale;
- des organes de commande respectifs (5) emboîtés sur les arbres (2) du côté de la cloison verticale opposé à celui occupé par les rouleaux d'entraînement; et
- une roue dentée (72) emboîtée sur l'un des arbres parallèles et mise en rotation par un système d'actionnement (11 - 10)
  <u>caractérisé en ce que:</u>
- la structure porteuse (3) se composé d'un corps principal (31) destiné à supporter au moins deux bras tournants (18) conjointement avec ledit système d'actionnement (11 - 10) et d'un ou plusieurs modules additionnels identiques (32) chacun desquels porte au moins un bras tournant (18) et un arbre parallèle (2) avec rouleau d'entraînement (1) et organe de commande (5) respectifs;
- le corps principal (31) et les modules additionnels (32) ont, en coupe transversale, sensiblement la même forme en "T" et sont pourvus aux deux extrémités de trous (12) dont les axes sont parallèles à l'axe longitudinal du corps principal et dans lesquels on peut engager des éléments de fixation (13) dans le but de permettre un assemblage de type modulaire de la structure porteuse (3); et
- on prévoit une unité de transmission (6, 61) destinée à actionner les arbres (2) parallèles à l'arbre principal appartenant au corps principal de la structure porteuse.

2. Dispositif d'entraînement selon la revendication 1, dont la strucutre porteuse (3) est renfermée à sa partie supérieure et sur l'un de ses côtés, ensemble avec les organes de commande (5), par une enveloppe de protection (4), caractérisé en ce que cette enveloppe (4) se compose d'un panneau supérieur (41) renfermant ledit corps principal (31) à sa partie supérieure, un panneau latéral (42) entourant ledit corps sur l'un de ses côtés, deux cloisons transversales (44) renfermant le corps principal (31) ou les modules additionnels (32) aux deux extrémités, un panneau additionnel supérieur (47) renfermant chaque module additionnel à sa partie supérieure et un panneau additionnel latéral (43) entourant le côté de chaque module additionnel; et en ce que le panneau latéral (42) du corps principal est pourvu d'une ouverture (46), renfermée par un respectif couvercle (45) qui permet l'introduction de la transmission mécanique (7).

3. Dispositif d'entraînement selon la revendication 1, caractérisé en ce que deux organes de commande (5) sont emboîtés l'un à côté de l'autre sur l'un au moins desdits arbres parallèles (2) portés par le corps principal (31), et qu'une deuxième ligne de transmission sans fin (61) engageant le plus en dehors des deux organes de commande précités, engage de la même manière l'organe de commande emboîté sur l'arbre (2) d'un module additionnel.

4. Dispositif d'entraînement selon la revendication 1, caractérisé en ce que les modules additionnels (32) de la structure porteuse (3) peuvent être indifféremment appliqués à l'une quelconque des deux extrémités du corps principal (31).

5. Dispositif d'entraînement selon la revendication 1, caractérisé en ce que le corps principal (31) de la structure porteuse (3) est destiné à supporter trois arbres parallèles (2), et en ce que deux organes de commande (5) sont emboîtés sur l'un au moins des deux arbres extrêmes.

6. Dispositif d'entraînement selon la revendication 1, caractérisé en ce que la roue dentée (72) emboîtée sur l'un des arbres parallèles engrène avec une deuxième roue dentée (73) emboîtée sur un arbre moteur (8) qui est solidaire d'une roue hélocoïdale (9) engrenant avec une vis sans fin (10) mise en mouvement par un moteur (11) et en ce que la vis sans fin est mise en mouvement par ledit moteur au moyen d'un varateur de vitesse (14) monté dans une respective enveloppe de protection (15) que peut être fixée à ou séparée dudit corps principal (31) de la structure porteuse (3).

7. Dispositif d'entraînement selon la revendication 1, caractérisé en ce que les arbres parallèles (2) supportés par le corps principal (31) de la structure porteuse (3) sont espacés d'une distance régulière (p) et en ce que chaque module additionnel (32) présente deux trous pour le logement desdits arbres lesquels sont disposés à une telle distance qu'un arbre situé dans le trou le plus éloigné du corps principal sera séparé de l'arbre du corps principal le plus proche du module additionnel de la même distance (p) séparant deux arbres adjacents du corps principal.

8. Dispositif d'entraînement selon la revendication 1, caractérisé en ce que la cloison verticale (33) du corps principal (31) et des modules additionnels (32) forme la branche verticale de la section transversale en forme de "T" de la structure porteuse (3) et est repliée de 90° à sa partie inférieure de manière à créer un panneau horizontal de fond (35) pour la protecton de l'ensemble des organes qui transmettent le mouvement auxdits rouleaux d'entraînement (1).

FIG.1

FIG.3

44  1  18  20  32        1        I  33  18  20  3  31  18  1

p        p

2

5                                                    6

                                        8  9  10

                                                    34

                        I                            44

43  34  61  5        42  46  72  45        73        5

**FIG. 2**

                                        21  41  32

                    44

                    13

                                        24

                        12

**FIG. 4**